(19) Europäisches Patentamt
European Patent Office
Office européen des brevets

(11) **EP 2 940 849 B1**

(12) **FASCICULE DE BREVET EUROPEEN**

(45) Date de publication et mention
de la délivrance du brevet:
**03.01.2018 Bulletin 2018/01**

(51) Int Cl.:
***H02M 3/335*** (2006.01)

(21) Numéro de dépôt: **15164474.7**

(22) Date de dépôt: **21.04.2015**

(54) **ALIMENTATION ÉLECTRIQUE ET PROCÉDÉ DE COMMANDE D'UNE ALIMENTATION ÉLECTRIQUE**

ELEKTRISCHE STROMVERSORGUNG UND STEUERVERFAHREN EINER SOLCHEN ELEKTRISCHEN STROMVERSORGUNG

POWER SUPPLY AND METHOD FOR CONTROLLING A POWER SUPPLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2014 FR 1453865**

(43) Date de publication de la demande:
**04.11.2015 Bulletin 2015/45**

(73) Titulaire: **Valeo Systèmes De Contrôle Moteur
95892 Cergy - Pontoise (FR)**

(72) Inventeurs:
• **Oswald, Dominique
78800 Houilles (FR)**
• **Bouchez, Boris
95800 Cergy Le Haut (FR)**

(74) Mandataire: **Argyma
36, rue d'Alsace Lorraine
31000 Toulouse (FR)**

(56) Documents cités:
**US-A1- 2014 029 316**

**Description**

DOMAINE TECHNIQUE

La présente invention concerne le domaine des alimentations électriques. En particulier, l'invention concerne une alimentation électrique isolée à résonnance. En outre, l'invention concerne un onduleur pour alimenter une machine électrique. L'onduleur comprend une partie haute tension et une partie basse tension séparées par une barrière d'isolation galvanique, et une alimentation électrique selon l'invention permettant de transmettre une énergie à travers la barrière d'isolation.

ARRIÈRE-PLAN TECHNOLOGIQUE

Afin d'alimenter une charge électrique à travers une barrière d'isolation galvanique, il est connu d'utiliser une alimentation électrique isolée comportant un transformateur. Le transformateur comporte un primaire connecté à ses bornes avec une source de tension et un secondaire connecté à la charge électrique. Dans cette alimentation électrique connue, une capacité de sortie connectée aux bornes du secondaire a pour but de stocker de l'énergie électrique et présente de ce fait une très grande valeur, généralement plus de un microfarad.

On connait en particulier une alimentation électrique isolée à résonance qui utilise une résonance entre une capacité et une inductance pour permettre une commutation à zéro de tension ou ZVS (« zéro voltage switching » en anglais) d'un interrupteur appartenant à l'alimentation électrique. Le document « A novel résonant converter topology for DC-to-DC power supply » de Liu et al. publié dans « IEEE Transactions on aerospace and electronic systems », vol. 31, N° 4, Octobre 1995, 1301, divulgue un exemple d'alimentation électrique résonant. Un problème des alimentations électriques à résonance consiste en ce que leur tension de sortie peut dépendre de l'impédance de la charge électrique alimentée par l'alimentation électrique.

Le document US20140029316 décrit une alimentation électrique comprenant un transformateur, un circuit de régularisation d'un courant magnétisant du transformateur, un dispositif de commande du circuit de régulation, une capacité de sortie connectée à un secondaire du transformateur.

La présente invention vise donc à obtenir une alimentation électrique isolée à résonance dans laquelle la tension de sortie est indépendante de l'impédance de la charge en sortie de l'alimentation électrique.

RÉSUMÉ DE L'INVENTION

À cet effet, il est proposé une alimentation électrique comprenant :

- un transformateur comportant un primaire destiné à être connecté à une source de tension et présentant une inductance de fuite, le transformateur étant destiné à être parcouru par un courant magnétisant,
- un circuit de régulation du courant magnétisant destiné à commuter entre :

  • un état magnétisant dans lequel le circuit de régulation est destiné à laisser le courant magnétisant augmenter, et
  • un état démagnétisant dans lequel le circuit de régulation est destiné à faire diminuer le courant magnétisant,

- un dispositif de commande du circuit de régulation destiné à faire commuter le circuit de régulation alternativement de l'état magnétisant à l'état démagnétisant pour respectivement alterner une phase de magnétisation et une phase de démagnétisation, le dispositif de commande étant destiné à faire durer la phase de magnétisation pendant un temps de magnétisation,
- une capacité de sortie connectée à un secondaire du transformateur de manière à former un circuit résonant avec l'inductance de fuite, la tension entre les bornes de la capacité de sortie correspondant à la tension de sortie de l'alimentation,

caractérisée en ce que le temps de magnétisation et la valeur de la capacité de sortie sont tels que, sur une partie, dite partie de résonance, de la phase de magnétisation, la tension de sortie décrit une portion de sinusoïde et, partant d'une valeur initiale inférieure à la valeur médiane de la sinusoïde, passe par la dite valeur médiane.

En particulier, la valeur initiale de la tension de sortie est la valeur de la tension de sortie au début de la phase de résonance, qui peut correspondre au début de la phase de magnétisation.

L'alimentation électrique selon l'invention est en particulier destinée à délivrer une tension constante. La tension constante correspond notamment à la valeur moyenne de la tension de sortie. Cette valeur moyenne de la tension de sortie peut être différente de la valeur médiane de la sinusoïde suivie par la tension de sortie sur la phase de résonance.

Dans au moins une partie de la phase de magnétisation, une alimentation électrique à résonance a une tension de sortie comprenant une valeur crête inférieure d'une sinusoïde suivie par la tension de sortie dans cette partie de la phase de magnétisation.

Lorsque l'impédance de la charge en sortie d'une alimentation électrique à résonnance augmente, la valeur crête inférieure de la sinusoïde dérive vers des valeurs plus faibles. Dans une alimentation à résonance de l'art antérieur, l'état de magnétisation s'arrête avant que la tension de sortie ait atteint la valeur médiane de la sinusoïde. Dans l'alimentation selon l'invention, l'état de magnétisation s'arrête au moins après que la tension de sortie ait atteint la valeur médiane de la sinusoïde. Ainsi, la dérive de la valeur crête inférieure de la sinusoïde vers des valeurs plus faibles est compensée au moins en partie par la dérive correspondante de la valeur crête supérieure de la sinusoïde vers des valeurs plus élevées.

De même, lorsque l'impédance de la charge en sortie d'une alimentation électrique à résonnance diminue, la dérive de la valeur crête inférieure de la sinusoïde vers des valeurs plus élevées est compensée au moins en partie par la dérive correspondante de la valeur crête supérieure de la sinusoïde vers des valeurs plus faibles.

L'influence de l'impédance de la charge de sortie sur la tension de sortie est donc diminuée par rapport à une alimentation électrique à résonance de l'art antérieure.

De façon optionnelle, la partie de résonance s'étend sur toute la phase de magnétisation.

De façon optionnelle également, le temps de magnétisation et la valeur de la capacité de sortie sont tels que, sur la partie de résonance, la tension de sortie passe par la valeur de crête supérieure de la sinusoïde.

Ainsi, lorsque l'impédance de la charge en sortie d'une alimentation électrique à résonnance augmente, la dérive de la valeur crête inférieure de la sinusoïde vers des valeurs plus faibles est compensée, presque totalement, voire totalement, par la dérive correspondante de la valeur crête supérieure de la sinusoïde vers des valeurs plus élevées.

De même, lorsque l'impédance de la charge en sortie d'une alimentation électrique à résonnance diminue, la dérive de la valeur crête inférieure de la sinusoïde vers des valeurs plus élevées est compensée, presque totalement, voire totalement, par la dérive correspondante de la valeur crête supérieure de la sinusoïde vers des valeurs plus faibles.

L'influence de l'impédance de la charge de sortie sur la tension de sortie est donc sensiblement faible, voire nulle, par rapport à une alimentation électrique à résonance de l'art antérieure.

L'alimentation électrique selon l'invention est en particulier destinée à délivrer une tension constante. La tension constante correspond notamment à la valeur moyenne de la tension de sortie. Cette valeur moyenne de la tension de sortie peut correspondre à la valeur médiane de la sinusoïde suivie par la tension de sortie sur la phase de résonance.

De façon optionnelle également, le temps de magnétisation et la valeur de la capacité de sortie sont tels que, après avoir passé la valeur de crête supérieure de la sinusoïde, la tension de sortie diminue pendant le reste de la partie de résonance au plus jusqu'à la valeur médiane de la sinusoïde, et de préférence d'un montant valant au plus 50% de la différence entre la valeur de crête supérieure de la sinusoïde et la valeur médiane, et de préférence encore d'un montant valant au plus 25% de la différence entre la valeur de crête supérieure de la sinusoïde et la valeur médiane.

De façon optionnelle également, le temps de magnétisation vaut entre 25% et 75% de la période de la sinusoïde.

De façon optionnelle, les variations de la tension de sortie pendant la partie de résonance décrivent une portion de sinusoïde présentant une période dépendant de la valeur de la capacité de sortie, la valeur de la capacité de sortie étant telle que ladite période est comprise entre 0,1 et 2 microsecondes.

De façon optionnelle également, le temps de magnétisation est compris entre :

$$\frac{\pi}{2}\sqrt{L_F C_S}$$

et

$$\frac{3\pi}{2}\sqrt{L_F C_S}$$

où $L_F$ est la valeur de l'inductance de fuite du transformateur et $C_S$ est la valeur de la capacité de sortie.

De façon optionnelle également, la capacité de sortie présente une valeur comprise entre 0,5 et 200 nanofarads, par exemple 50 nanofarads.

De façon optionnelle également, le secondaire du transformateur comporte une borne haute destinée à présenter un potentiel haut et par laquelle un courant secondaire est destiné à sortir et une borne basse destinée à présenter un potentiel bas par rapport au potentiel haut de la borne haute.

De façon optionnelle également, l'alimentation électrique comporte en outre :

- une diode destinée à empêcher la circulation d'un courant secondaire vers le secondaire du transformateur par sa borne haute.

En particulier, la diode a son anode connectée à la borne haute du secondaire du transformateur.

De façon optionnelle également, le temps de magnétisation est tel que, à la fin de l'état de magnétisation, le courant secondaire est nul ou vaut au plus 5% de sa valeur crête.

De façon optionnelle également, le circuit de régulation comporte :

- un interrupteur dont l'état fermé correspond à l'un parmi les états magnétisant et démagnétisant du circuit de régulation et dont l'état ouvert correspond à l'autre parmi les états magnétisant et démagnétisant du circuit de régulation, et
- une capacité de démagnétisation destinée à provoquer une mise en oscillation du courant magnétisant durant la phase de démagnétisation au cours de laquelle le circuit de régulation est à l'état démagnétisant.

De façon optionnelle également, la capacité de démagnétisation est en parallèle de l'interrupteur.

De façon optionnelle également, la capacité de démagnétisation est connectée entre les bornes du primaire du transformateur.

De façon optionnelle également, la capacité de démagnétisation est en parallèle de la diode.

De façon optionnelle également, la capacité de démagnétisation est en outre destinée à provoquer une mise en oscillation de la tension aux bornes de l'interrupteur lors de la phase de démagnétisation, et le dispositif de commande est destiné à faire durer la phase de démagnétisation pendant un temps de démagnétisation tel que, au bout du temps de démagnétisation, lors de la fermeture de l'interrupteur pour passer de l'état démagnétisant à l'état magnétisant, la tension aux bornes de l'interrupteur soit nulle ou vaille au plus 5% de sa valeur crête.

De façon optionnelle également, l'alimentation électrique comporte en outre un dispositif de mesure de la valeur crête à crête de la tension de sortie.

De façon optionnelle également, le dispositif de mesure est en outre destiné à estimer un courant de sortie fourni par la borne de la capacité de sortie connectée à la borne haute du secondaire du transformateur à partir de la valeur crête à crête de la tension de sortie.

L'invention concerne également un convertisseur de tension comprenant :

- un circuit ayant une première partie liée à une première masse électrique et une seconde partie liée à une seconde masse électrique, les dites parties étant séparées par une isolation galvanique,
- une alimentation électrique selon l'invention destinée à alimenter une charge électrique située dans une des parties avec une énergie provenant de l'autre partie à travers la dite isolation galvanique.

En particulier, le convertisseur est un convertisseur continu-alternatif pour alimenter une machine électrique. Le convertisseur peut également être un convertisseur de courant continu-continu.

Il est également proposé un procédé de commande d'une alimentation électrique comportant :

- un transformateur comportant un primaire destiné à être connecté à une source de tension et présentant une inductance de fuite, le transformateur étant destiné à être parcouru par un courant magnétisant,
- un circuit de régulation du courant magnétisant destiné à commuter entre :

  • un état magnétisant dans lequel le circuit de régulation est destiné à laisser le courant magnétisant augmenter, et
  • un état démagnétisant dans lequel le circuit de régulation est destiné à faire diminuer le courant magnétisant,

- une capacité de sortie connectée à un secondaire du transformateur de manière à former un circuit résonant avec l'inductance de fuite, la capacité de sortie présentant une tension de sortie entre ses bornes,

le procédé comportant :

- faire commuter le circuit de régulation alternativement de l'état magnétisant à l'état démagnétisant pour respectivement alterner une phase de magnétisation et une phase de démagnétisation, la phase de magnétisation durant pendant un temps de magnétisation, qui est fonction de la valeur de la capacité de sortie de telle sorte que, sur une partie, dite partie de résonance, de la phase de magnétisation, la tension de sortie décrit une portion de sinusoïde et, partant d'une valeur initiale inférieure à la valeur médiane de la sinusoïde, passe par la dite valeur médiane.

## DESCRIPTION DES FIGURES

Des modes de réalisation de l'invention vont à présent être décrits à titre d'exemple uniquement, en référence aux figures suivantes.

La figure 1 représente un circuit électrique comportant une alimentation électrique selon un premier mode de réalisation de l'invention.

Les figures 2 à 4 représentent des schémas électriques équivalents du circuit électrique de la figure 1 dans différents états de fonctionnement.

La figure 5 est un schéma-blocs d'un procédé mis en oeuvre avec l'alimentation électrique de la figure 1.

La figure 6 regroupe des chronogrammes de trois grandeurs électriques du circuit électrique de la figure 1, en particulier d'une tension de sortie $V_S$ du circuit électrique de la figure 1.

La figure 7 est un agrandissement du chronogramme de la figure 6 de la tension de sortie $V_S$.

La figure 8 est un chronogramme de la tension de sortie $V_S$ dans un autre mode de réalisation de l'invention.

Les figures 9 à 12 représentent des courbes d'oscillations suivies par la tension de sortie $V_S$ lorsqu'elle est en résonance selon différents modes de réalisation de l'invention, des portions des courbes où la résonance peut prendre fin étant mises en évidence.

Les figures 13 et 14 représentent des circuits électriques comportant des alimentations électriques selon d'autres modes de réalisation de l'invention.

## DESCRIPTION DÉTAILLÉE

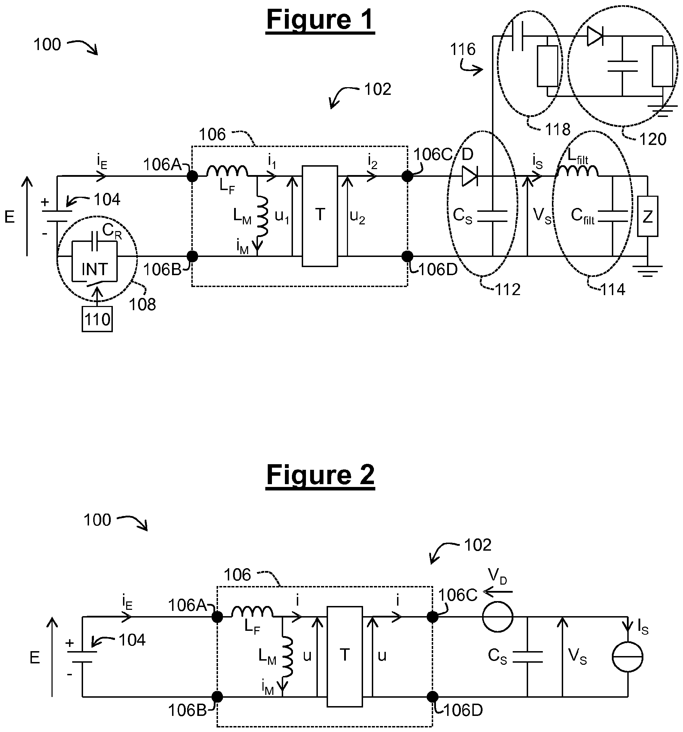

En référence à la figure 1, un circuit électrique 100 mettant en oeuvre l'invention va à présent être décrit.

Le circuit électrique 100 comporte une alimentation électrique 102 et une charge Z destinée à être alimentée par l'alimentation électrique 102.

L'alimentation électrique 102 comporte tout d'abord une source de tension 104 destinée à présenter une tension d'alimentation E entre sa borne positive (+) et sa borne négative (-) et à fournir un courant d'alimentation $i_E$ par sa borne positive (+). Dans l'exemple décrit, la tension d'alimentation E est continue et constante.

L'alimentation électrique 102 comporte en outre un transformateur 106 destiné, dans l'exemple décrit, à diviser la tension d'alimentation E.

Le transformateur 106 comporte un enroulement primaire, appelé par la suite simplement « primaire », et un enroulement secondaire, appelé par la suite simplement « secondaire ».

Le primaire présente une borne haute 106A et une borne basse 106B, la borne haute 106A étant destinée à présenter un potentiel supérieur à celui de la borne basse 106B.

Le secondaire présente une borne haute 106C et une borne basse 106D, la borne haute 106C étant destinée à présenter un potentiel supérieur à celui de la borne basse 106D.

Dans le cadre de la présente invention, le transformateur 106 est modélisé de la manière suivante.

Le transformateur 106 comporte tout d'abord un transformateur idéal T comprenant un primaire idéal et un secondaire idéal.

Le primaire idéal présente une borne haute et une borne basse, la borne haute étant destinée à présenter un potentiel supérieur à celui de la borne basse. Un courant primaire $i_1$ entre dans le primaire idéal par sa borne haute. Le primaire idéal présente en outre une tension primaire $u_1$ entre ses bornes.

Le secondaire idéal présente une borne haute et une borne basse, la borne haute étant destinée à présenter un potentiel supérieur à celui de la borne basse. Un courant secondaire $i_2$ sort du primaire idéal par sa borne haute. Le secondaire idéal présente en outre une tension secondaire $u_2$ entre ses bornes.

Le transformateur idéal T présente en outre un rapport de transformation n reliant les courants et les tensions primaires et secondaires de la manière suivante :

$$ n = \frac{u_2}{u_1} = \frac{i_1}{i_2} $$

Le transformateur 106 comporte en outre une inductance magnétisante $L_M$ disposée entre les bornes du primaire idéal et parcourue par un courant magnétisant $i_M$. L'inductance magnétisante $L_M$ traduit le fait que la réluctance du noyau du transformateur 106 n'est pas nulle.

Le transformateur 106 comporte en outre une inductance de fuite $L_F$ présentant une borne connectée à la borne haute du primaire idéal, l'autre borne de l'inductance de fuite $L_F$ correspondant à la borne haute 106A du transformateur 106. L'inductance de fuite $L_F$ traduit le fait que le circuit magnétique du transformateur 106 ne canalise pas tout à fait la totalité du champ magnétique créé par le primaire. En d'autres termes, des lignes de champ magnétique s'échappent hors du transformateur 106 et ne sont pas exploitées par le secondaire.

Par ailleurs, la borne basse du primaire idéal correspond à la borne basse 106B du transformateur 106.

Généralement, l'inductance de magnétisation $L_M$ est beaucoup plus grande, c'est-à-dire par exemple au moins 50 fois plus grande, de préférence 100 fois plus grande, que l'inductance de fuite $L_F$.

L'alimentation électrique 102 comporte en outre un circuit de régulation 108 du courant magnétisant $i_M$, destiné à maintenir le courant magnétisant $i_M$ à un niveau raisonnable, c'est-à-dire inférieur ou de même ordre de grandeur que le courant primaire $i_1$ attendu pour la charge Z maximale pour laquelle l'alimentation électrique 102 a été conçue.

Le circuit de régulation 108 est par exemple intercalé entre la source de tension 104 et le transformateur 106. Dans l'exemple décrit, le circuit de régulation 108 est intercalé entre la borne basse 106B du primaire du transformateur 106 et la borne négative (-) de la source de tension 104, tandis que la borne haute 106A du primaire du transformateur 106 est connectée directement à la borne positive (+) de la source de tension 104.

Le circuit de régulation 108 est destiné à commuter entre deux états, appelés respectivement état magnétisant et état démagnétisant. Dans l'état magnétisant, le circuit de régulation 108 est destiné à laisser la source de tension 104 magnétiser le transformateur 106, c'est-à-dire à laisser le courant magnétisant $i_M$ augmenter. Dans l'état démagnétisant, le circuit de régulation 108 est destiné à démagnétiser le transformateur 106, c'est-à-dire à faire diminuer le courant magnétisant $i_M$.

Dans l'exemple décrit, le circuit de régulation 108 comporte, d'une part, un interrupteur INT, connectant la borne négative (-) de la source de tension 104 à la borne basse 106B du primaire du transformateur 106 et, d'autre part, une capacité $C_R$, dite capacité de démagnétisation, en parallèle avec l'interrupteur INT.

Ainsi, lorsque l'interrupteur INT est fermé (ce qui correspond à l'état magnétisant), la borne basse 106B est connectée directement à la borne négative (-) de la source de tension 104, en court-circuitant la capacité $C_R$. La tension d'alimentation E est ainsi appliquée au primaire du transformateur 106.

Lorsque l'interrupteur INT est ouvert (ce qui correspond à l'état démagnétisant), la borne basse 106B est connectée à la borne négative (-) de la source de tension 104 au travers de la capacité de démagnétisation $C_R$, ce qui crée une résonance entre la capacité de démagnétisation $C_R$ et les inductances de fuite $L_F$ et de magnétisation $L_M$, comme cela sera expliqué par la suite. La tension aux bornes de l'interrupteur INT est appelée par la suite tension $V_{INT}$.

L'alimentation électrique 102 comporte en outre un dispositif 110 de commande du circuit de régulation 108 destiné à faire commuter le circuit de régulation 108 alternativement d'un état à l'autre, pour respectivement alterner une phase de magnétisation (correspondant à l'état magnétisant du circuit électrique 108) et une phase de démagnétisation (correspondant à l'état démagnétisant du circuit électrique 108). Le dispositif de commande 110 est destiné à faire durer la phase de magnétisation (circuit de régulation 108 dans l'état de magnétisation) pendant un temps de magnétisation $T_F$ et à faire durer la phase de démagnétisation (circuit de régulation 108 dans l'état de démagnétisation) pendant un temps de démagnétisation $T_O$.

Le temps de magnétisation $T_F$ est de préférence choisi tel que, à sa fin, c'est-à-dire à l'ouverture de l'interrupteur INT pour passer de l'état magnétisant à l'état démagnétisant, le courant secondaire $i_2$ est nul ou vaut au plus 5% de sa valeur crête.

Le temps de démagnétisation $T_O$ est de préférence choisi tel que, à sa fin, c'est-à-dire à fermeture de l'interrupteur INT pour passer de l'état démagnétisant à l'état magnétisant, la tension $V_{INT}$ aux bornes de l'interrupteur INT est nulle ou vaut au plus 5% de sa valeur crête.

Dans l'exemple décrit, les temps de magnétisation $T_F$ et démagnétisation $T_O$ peuvent être déterminés au préalable à partir des caractéristiques de l'alimentation électrique 102 telles que par exemple une tension constante que l'alimentation est destinée à délivrer en sortie. Ces temps de magnétisation $T_F$ et de démagnétisation $T_O$ sont de préférence enregistrés dans une mémoire du dispositif de commande 110 pour pouvoir être utilisés lors du fonctionnement de l'alimentation électrique 102.

Il sera apprécié que les temps de magnétisation $T_F$ et démagnétisation $T_O$ peuvent être choisis chacun indépendamment de l'autre.

L'alimentation électrique 102 comporte en outre un étage de sortie 112 du transformateur 106.

L'étage de sortie 112 comporte tout d'abord une diode D connectée à la borne haute 106C du secondaire du transformateur 106 et destinée à empêcher le courant secondaire $i_2$ de devenir négatif, c'est-à-dire d'entrer dans l'enroulement secondaire.

L'étage de sortie 112 comporte en outre une capacité de sortie $C_S$ présentant une borne connectée par l'intermédiaire de la diode D à la borne haute 106C du secondaire du transformateur 106 et une autre borne connectée à la borne basse 106D du secondaire du transformateur 106. La capacité de sortie $C_S$ ainsi connectée forme un circuit résonant avec l'inductance de fuite $L_F$ du transformateur 106. La capacité de sortie $C_S$ est en outre destinée à présenter une tension $V_S$ entre ses bornes dont la valeur moyenne correspond notamment à une tension constante que l'alimentation électrique doit délivrer.

Comme cela sera expliqué plus en détail par la suite, le temps de magnétisation $T_F$ et la valeur de la capacité de sortie $C_S$ sont tels que, sur une partie de résonance de la phase de magnétisation, la tension de sortie $V_S$ décrit une portion de sinusoïde et, partant d'une valeur initiale inférieure à la valeur médiane de la sinusoïde, passe par la dite valeur médiane. Par exemple, la capacité de sortie $C_S$ présente une valeur comprise entre 0,5 et 200 nanofarads, par exemple comprise entre 5 et 100 nanofarads, par exemple égale à 50 nanofarads.

L'étage de sortie 112 fournit un courant de sortie $i_S$ provenant de la borne de la capacité de sortie $C_S$ connectée à la borne haute 106C du secondaire du transformateur 106. Pour filtrer le courant de sortie $i_S$, l'alimentation électrique 102 peut comporter un filtre de sortie 114 intercalé entre l'étage de sortie 112 et la charge Z. Le filtre de sortie 114 reçoit le courant de sortie $i_S$ et la tension de sortie $V_S$ y est appliquée. Le filtre de sortie 114 est destiné à filtrer le courant de sortie $i_S$, de sorte que ce courant soit quasi-constant à la fréquence de fonctionnement de l'alimentation électrique 102 (correspondant à la période $T_O+T_F$). Le filtre de sortie 114 est notamment utile lorsque la charge Z comporte des condensateurs qui perturberaient la résonnance s'ils étaient directement reliés derrière l'étage de sortie 112.

Dans l'exemple décrit, le filtre de sortie 114 est un filtre LC comportant une inductance $L_{filt}$ et une capacité $C_{filt}$. En variante, le filtre de sortie 114 peut être remplacé par un régulateur linéaire, par exemple un régulateur à faible chute (de l'anglais « Low-Dropout Regulator » ou LDO).

L'alimentation électrique 102 peut comporter en outre un dispositif 116 de mesure de la valeur crête à crête de la tension de sortie $V_s$.

Dans l'exemple décrit, le dispositif de mesure 116 comporte tout d'abord un filtre passe-haut 118. Par exemple, le filtre passe-haut 118 comporte un filtre RC. Le filtre passe-haut 118 est suivi d'un circuit 120 détecteur de crête comportant par exemple une diode suivie d'une capacité et d'une résistance en parallèle l'une de l'autre.

Le dispositif de mesure 116 est en outre destiné à estimer le courant de sortie $i_S$ à partir de la mesure de la valeur crête à crête de la tension de sortie $V_S$. En effet, cette valeur crête à crête dépend directement de la capacité de sortie $C_S$, du courant de sortie $i_S$ et de la fréquence de fonctionnement de l'alimentation électrique 102. L'estimation du courant de sortie $i_S$ permet par exemple de mettre en place une protection en surcourant dans l'alimentation électrique 102.

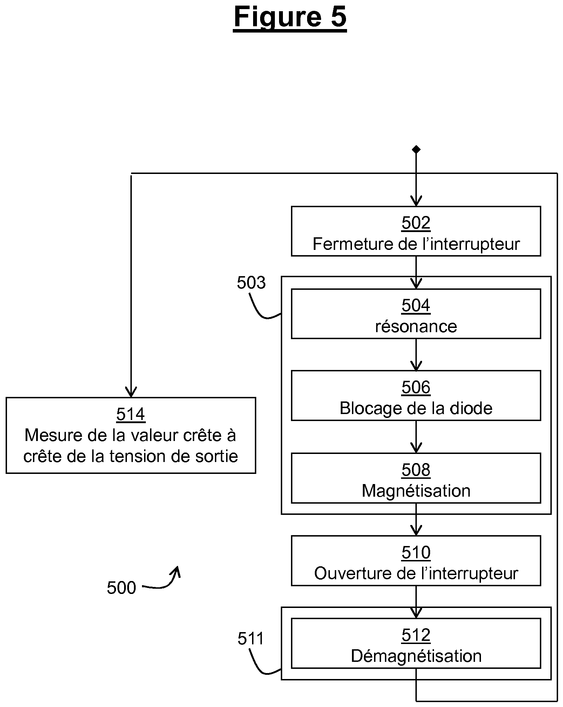

En référence aux figures 2 à 5, un procédé 500 de fonctionnement du circuit électrique 100 va à présent être décrit.

Pour simplifier la description, il est supposé que le rapport de transformation n du transformateur idéal T vaut 1. Ainsi, dans ce cas, le courant primaire $i_1$ et le courant secondaire $i_2$ sont égaux. Ils seront appelés par la suite courant primaire/secondaire i. De même, la tension primaire $u_1$ et la tension secondaire $u_2$ sont égales. Elles seront appelées par la suite tension primaire/secondaire u.

En outre, le filtre de sortie 114 et la charge Z sont modélisés par une source de courant constant $I_s$.

À une étape 502, le dispositif de commande 110 fait commuter le circuit de régulation 108 à l'état magnétisant en fermant l'interrupteur INT. En conséquence, la diode D devient passante et présente une tension $V_D$ à ses bornes. Le schéma électrique résultant est représenté sur la figure 2.

Au moment de la fermeture de l'interrupteur INT, la tension de sortie $V_S$, le courant magnétisant $i_M$, la tension $V_{INT}$ de l'interrupteur INT et le courant primaire/secondaire i présentent les valeurs suivantes :

$$V_S(0) = V_{S0}$$

$$i_M(0) = i_{M0}$$

$$V_{INT}(0) = 0$$

$$i(0) = 0$$

La valeur $V_{S0}$ est appelée par la suite « valeur initiale de résonance ».

Suite à l'étape 502, une phase de magnétisation 503 débute.

Au cours d'une étape 504 se déroulant sur une partie de la phase de magnétisation 503, les grandeurs électriques évoluent au cours du temps de la manière qui va à présent être décrite. En particulier, comme cela va être expliqué, la capacité de sortie $C_S$ et l'inductance de fuite $L_F$ forment un circuit résonnant de sorte que la tension de sortie $V_S$ décrit une portion de sinusoïde. L'étape 504 dure un temps de résonance $T_{rés}$.

Les équations suivantes sont déduites de la figure 2 :

7

$$E = L_F i_E{}' + L_M i_M{}' = L_F i_E{}' + V_D + V_S$$

$$i_E = i + i_M$$

$$i = I_S + C_S V_S{}'$$

Ainsi, en tenant compte du fait que l'inductance magnétisante $L_M$ est beaucoup plus grande que l'inductance de fuite $L_F$, la tension de sortie $V_S$ satisfait l'équation différentielle :

$$E - V_D = L_F C_S V_S{}'' + V_S$$

Ainsi, en tenant compte des conditions initiales :

$$V_S(0) = V_{S0}$$

$$i(0) = 0 = I_S + C_S V_S{}'(0)$$

la tension de sortie $V_S$ et le courant primaire/secondaire $i$ oscillent suivant les équations suivantes :

$$V_S = E - V_D - (E - V_D - V_{S0}) \frac{\cos(\omega_1 t - \varphi_1)}{\cos(\varphi_1)}$$

$$i = I_S + \omega_1 C_S (E - V_D - V_{S0}) \sin(\omega_1 t - \varphi_1) = I_S \left( 1 + \frac{\sin(\omega_1 t - \varphi_1)}{\sin(\varphi_1)} \right)$$

avec :

$$\omega_1 = \frac{1}{\sqrt{L_F C_S}}$$

et :

$$\varphi_1 = \arctan \left( \frac{I_S}{\omega_1 C_S (E - V_D - V_{S0})} \right)$$

Ainsi, d'après l'expression de la pulsation d'oscillation $\omega_1$, la mise en oscillation de la tension de sortie $V_S$ et du courant primaire/secondaire $i$ est provoquée par la présence de la capacité de sortie $C_S$ qui forme avec l'inductance de fuite $L_F$ un circuit résonant.
En outre, il sera apprécié que la tension de sortie $V_S$ oscille autour de la valeur médiane V qui est égale en particulier à $E-V_D$.
Par ailleurs, la sinusoïde, de laquelle la tension de sortie $V_S$ a l'allure pendant la période de résonance 504, a une période $T_{osc}$ égale à :

$$T_{osc} = \frac{2\pi}{\omega_1} = 2\pi \sqrt{L_F C_S}$$

Ainsi, la période $T_{osc}$ de la sinusoïde dépend de la valeur de la capacité de sortie $C_S$. De préférence, la valeur de la capacité de sortie $C_S$ est telle que la période de la sinusoïde $T_{osc}$ est comprise entre 0,1 et 2 microsecondes.

Par ailleurs, le courant magnétisant $i_M$ évolue suivant l'équation :

$$i_M = i_{M0} + \frac{E}{L_M}t + \frac{I_S}{{\omega_1}^2 L_M C_S}\left(1 + \frac{\sin(\omega_1 t - \varphi_1)}{\sin(\varphi_1)}\right)$$

Le terme sinusoïdal est en général très faible devant la partie linéaire, de sorte que courant magnétisant $i_M$ augmente de manière quasi-linéaire.

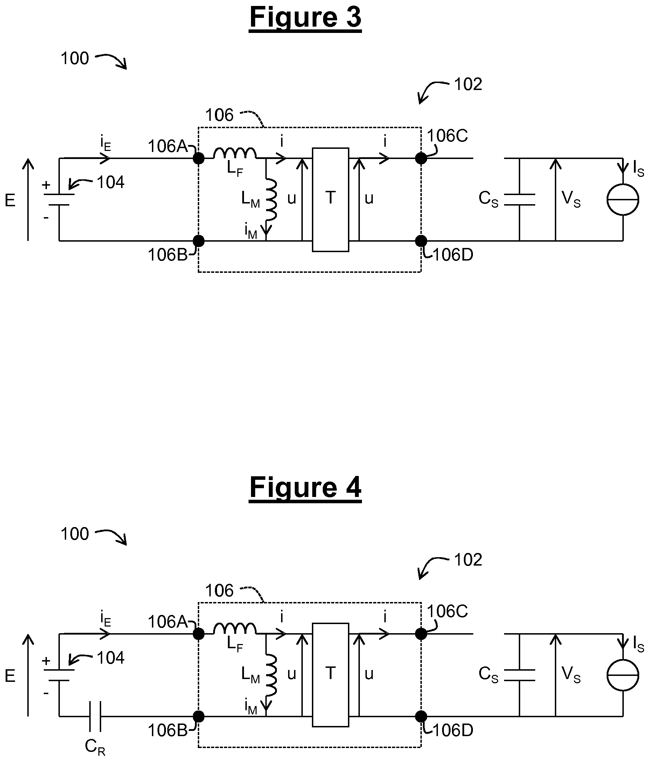

À une étape 506 se produisant au bout d'un temps $(\pi + 2\varphi_1)/\omega_1$ après la fermeture de l'interrupteur INT, le courant primaire/secondaire i a réalisé une demi-oscillation et revient à zéro, de sorte que la diode D passe à l'état bloqué. Le schéma électrique résultant est représenté sur la figure 3. Comme cela sera expliqué par la suite, le blocage de la diode entraîne l'arrêt de la résonance pour la tension de sortie $V_S$.

Au moment du blocage de la diode D, la tension de sortie $V_S$ a atteint une valeur finale de résonance $V_{s1}$ qui est de préférence supérieure à la valeur initiale de résonance $V_{S0}$. La valeur finale de résonance $V_{S1}$ vaut :

$$V_{S1} = E - V_D + (E - V_D - V_{S0}) = 2E - 2V_D - V_{S0}$$

En outre, le courant magnétisant $i_M$ a augmenté jusqu'à atteindre la valeur $i_{M1}$ :

$$i_{M1} = i_{M0} + \frac{E}{L_M} \cdot \frac{\pi + 2\varphi_1}{\omega_1} + \frac{2I_S}{{\omega_1}^2 L_M C_S}$$

Au cours d'une étape 508 se déroulant sur le reste de la phase de magnétisation 506, les grandeurs électriques évoluent au cours du temps de la manière qui va à présent être décrite.

Le courant emmagasiné dans la capacité de sortie $C_S$ se décharge dans le générateur de courant $I_S$, de sorte que la tension de sortie $V_S$ diminue suivant l'équation :

$$V_S = V_{S1} - \frac{I_S}{C_S}t$$

Par ailleurs, la source de tension 104 continue de magnétiser le transformateur T, de sorte que le courant magnétisant $i_M$ augmente linéairement selon l'équation :

$$i_M = i_{M1} + \frac{E}{L_F + L_M}t$$

Bien sûr, si le temps de magnétisation $T_F$ est choisi égal ou inférieur à $(\pi + 2\varphi_1)/\omega_1$, c'est-à-dire s'il se termine avant ou au moment du blocage de la diode D, alors l'étape 508 ne se produit pas. Dans ce cas, la tension de sortie $V_S$ résonne pendant toute la phase de magnétisation 503, et le temps de résonance $T_{rés}$ est égal au temps de magnétisation $T_F$.

Si le temps de magnétisation est choisi inférieur à $(\pi + 2\varphi_1)/\omega_1$ (avant que le courant primaire/secondaire n'ait eu le temps de s'annuler), le temps magnétisation $T_F$ est de préférence choisi de sorte que le courant primaire/secondaire i a eu le temps de diminuer pour valoir 5% ou moins de sa valeur crête égale à :

$$I_S\left(1 + \frac{1}{\sin(\varphi_1)}\right)$$

Si le temps de magnétisation $T_F$ est choisi supérieur à $(\pi + 2\varphi_1)/\omega_1$, c'est-à-dire s'il se termine après le blocage de la diode D, alors la résonance de la tension de sortie $V_S$ s'arrête avant la fin de la phase de magnétisation 503 et l'étape 508 se produit. Le temps de magnétisation $T_F$ est alors égal au temps de résonance $T_{rès}$ plus le reste de la durée de la phase de magnétisation 503.

De manière générale, le temps de magnétisation $T_F$ est par exemple compris entre :

$$\frac{\pi}{2}\sqrt{L_F C_S}$$

et

$$\frac{3\pi}{2}\sqrt{L_F C_S}$$

c'est-à-dire entre 25% et 75% de la période de la sinusoïde $T_{osc}$. De cette manière, la partie de résonance peut durer pendant un temps correspondant à une portion de sinusoïde comprise entre un quart de période $T_{osc}$ et trois-quarts de période $T_{osc}$.

À une étape 510, à la fin du temps de magnétisation $T_F$, le dispositif de commande 110 fait commuter le circuit de régulation 108 dans l'état de démagnétisation en ouvrant l'interrupteur INT. Le temps de magnétisation $T_F$ représente donc également la durée de fermeture de l'interrupteur INT.

Le schéma électrique résultant est représenté sur la figure 4.

Au moment de l'étape 510, la tension de sortie $V_S$ a diminué jusqu'à la valeur $V_{S2}$ :

$$V_{S2} = V_{S1} - \frac{I_S}{C_S}\left(T_F - \frac{\pi + 2\varphi_1}{\omega_1}\right)$$

et le courant magnétisant $i_M$ a augmenté jusqu'à la valeur $i_{M2}$ :

$$i_{M2} = i_{M1} + \frac{E}{L_F + L_M}(T_F - \frac{\pi + 2\varphi_1}{\omega_1})$$

Bien sûr, dans le cas où le temps de fermeture $T_F$ est égal à $(\pi + 2\varphi_1)/\omega_1$, on a : $V_{S1}=V_{S2}$ et $i_{M1}=i_{M2}$.

La phase de démagnétisation 511 débute après l'ouverture 510 de l'interrupteur.

La phase de démagnétisation 511 comporte une étape 512 au cours de laquelle les grandeurs électriques évoluent au cours du temps de la manière qui va à présent être décrite.

Le courant emmagasiné dans la capacité de sortie $C_S$ continue de se décharger dans la source de courant $I_s$, de sorte que la tension de sortie $V_s$ continue de diminuer suivant l'équation :

$$V_s = V_{S2} - \frac{I_S}{C_S}t$$

Par ailleurs, d'après la figure 4, la tension $V_{INT}$ et le courant de magnétisation $i_M$ sont liés par les équations suivantes :

$$V_{INT} = E - (L_F + L_M)i_M{}'$$

$$i_M = C_R V_{INT}{}'$$

Ainsi, en tenant compte du fait que l'inductance magnétisante $L_M$ est beaucoup plus grande que l'inductance de fuite $L_F$, la tension $V_{INT}$ satisfait l'équation différentielle :

$$E = (L_F + L_M)C_R V_{INT}{}'' + V_{INT}$$

En tenant compte des conditions initiales :

$$V_{INT}(0) = 0$$

$$i_M(0) = i_{M2}$$

la tension $V_{INT}$ et le courant de magnétisation $i_M$ oscillent selon les équations :

$$V_{INT} = E\left(1 - \frac{\cos(\omega_2 t + \varphi_2)}{\cos(\varphi_2)}\right)$$

$$i_M = i_{M2}\frac{\sin(\omega_2 t + \varphi_2)}{\sin(\varphi_2)}$$

avec :

$$\omega_2 = \frac{1}{\sqrt{L_M C_R}}$$

et :

$$\varphi_2 = \arctan\left(\frac{i_{M2}}{C_R E \omega_2}\right)$$

Le procédé retourne ensuite à l'étape 502 de fermeture de l'interrupteur INT. L'étape 502 est réalisée à la fin du temps de démagnétisation $T_O$ après l'ouverture de l'interrupteur INT (étape 510). Le temps de démagnétisation $T_O$ correspond donc notamment à la durée d'ouverture de l'interrupteur INT.

L'étape 502 de fermeture de l'interrupteur INT est de préférence réalisée au moment de l'annulation de la tension $V_{INT}$ ou à proximité de l'annulation de la tension $V_{INT}$, par exemple à 5% ou moins de sa valeur crête égale à :

$$V_{INT} = E\left(1 + \frac{1}{\cos(\varphi_2)}\right)$$

Pour cela, le temps d'ouverture $T_O$ peut être choisi égal à $(2\pi - 2\varphi_2)/\omega_2$ ou proche de cette valeur, par exemple à 10% près.

En régime établi de fonctionnement, au moment du retour à l'étape 502 de fermeture de l'interrupteur INT, la tension de sortie $V_S$ a diminué pour revenir à la valeur $V_{S0}$, donnée par l'équation suivante :

$$V_{S0} = V_{S2} - \frac{I_S}{C_S}T_O$$

et le courant de magnétisation $i_M$ atteint, notamment a diminué jusqu'à, la valeur $i_{M0}$ :

$$i_{M0} = i_{M2}\frac{\sin(\omega_2 T_O + \varphi_2)}{\sin(\varphi_2)}$$

Ainsi, en régime établi, la tension de sortie minimale $V_{S0}$ se déduit des équations précédentes et vaut :

$$V_{S0} = E - V_D - \frac{I_S}{2C_S}\left(T_F + T_O - \frac{\pi + 2\varphi_1}{\omega_1}\right)$$

On remarquera qu'en remplaçant $V_{S0}$ par cette valeur dans l'expression de $\varphi_1$, $\varphi_1$ est en fait indépendant du courant de sortie $I_S$.

En outre, la tension de sortie moyenne $<V_S>$ vaut :

$$\langle Vs \rangle = \frac{1}{T_F + T_O} \int_0^{T_F+T_O} V_S \, dt = E - V_D$$

Ainsi, grâce à la mise en résonnance de la capacité de sortie $C_S$ et l'inductance de fuite $L_F$, la tension de sortie moyenne $<V_S>$ n'est pas impactée par la charge de sortie Z.

En parallèle des étapes précédentes, au cours d'une étape 514 répétée au cours du temps, le dispositif de mesure 116 mesure la valeur crête à crête de la tension de sortie $V_S$ et détermine le courant secondaire i à partir de la mesure. Ainsi, il est possible de connaître l'évolution du courant secondaire dans le temps.

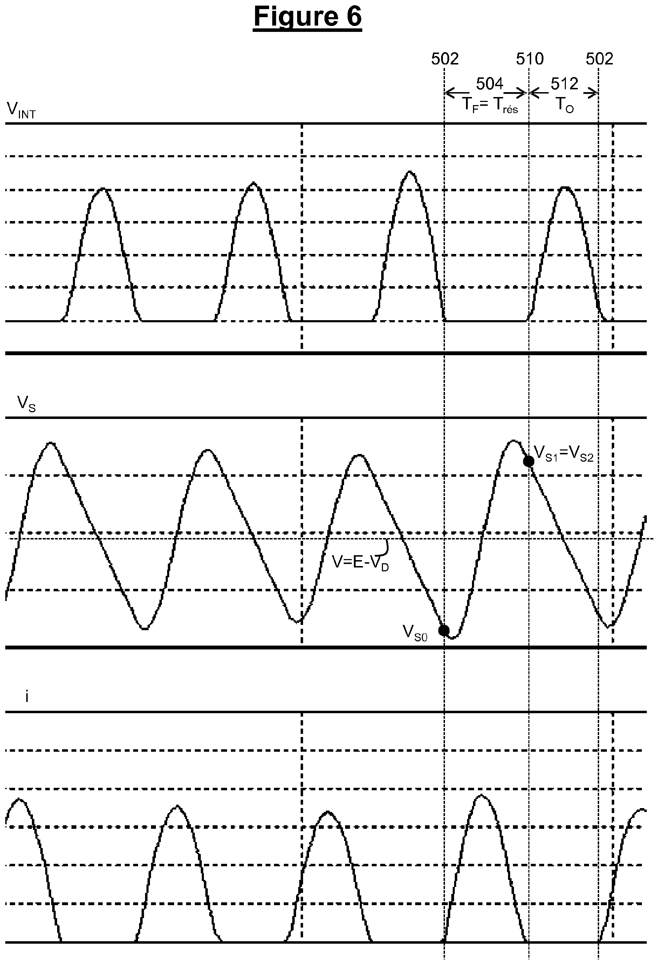

Des chronogrammes de la tension $V_{INT}$ aux bornes de l'interrupteur INT, de la tension de sortie $V_S$ et du courant primaire/secondaire i sont représentés sur la figure 6, dans le cas où le temps de magnétisation $T_F$ est égal à $(\pi + 2\varphi_1)/\omega_1$. Comme expliqué précédemment, dans ce cas, la phase de magnétisation 503 ne comporte que l'étape 504 et le temps de résonance $T_{rès}$ est égal au temps de magnétisation $T_F$.

Il sera apprécié que pendant la phase de magnétisation 503, le courant primaire/secondaire i parcourt une arche de sinus pour partir et revenir à zéro. Pendant ce temps, la tension de sortie $V_S$ varie de manière sinusoïdale en partant de la valeur initiale de résonance $V_{S0}$, qui est inférieure à la valeur médiane $E-V_D$, et en passant par la valeur médiane $E-V_D$. La tension de sortie $V_S$ atteint ensuite la valeur finale de résonance $V_{S1}$ située au-dessus de la valeur médiane $E-V_D$.

Pendant la phase de démagnétisation 511, la tension $V_{INT}$ parcourt une arche de sinus pour partir de zéro et y revenir. Cela facilite l'ouverture et la fermeture de l'interrupteur INT. Pendant ce temps, la tension de sortie $V_S$ diminue linéairement pour revenir à la valeur initiale de résonance $V_{S0}$.

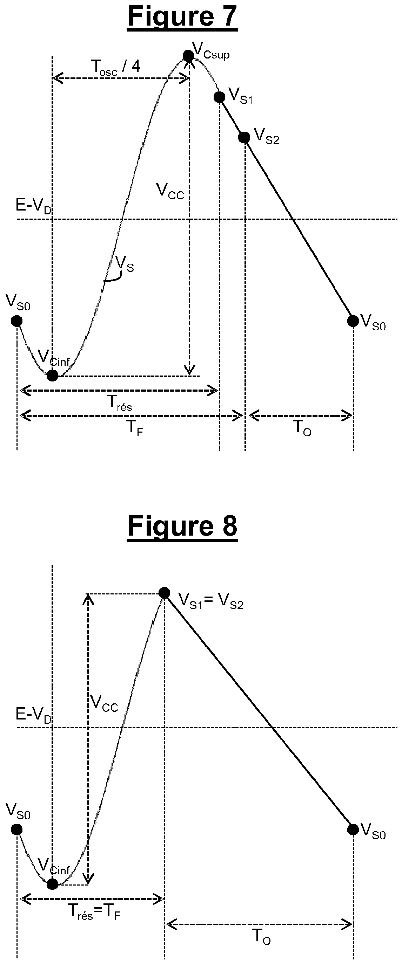

En référence à la figure 7, des variations de la tension $V_S$ vont être décrites plus en détail.

Sur une partie de résonance 504 de la phase de magnétisation 503, la tension de sortie $V_S$ suit tout d'abord une courbe sinusoïdale de période $T_{osc}$. La tension de sortie $V_S$ part de la valeur initiale de résonance $V_{S0}$. Elle diminue ensuite pour atteindre une valeur de crête inférieure $V_{Cinf}$ de la sinusoïde. La tension de sortie $V_S$ augmente ensuite et passe par la valeur médiane $E-V_D$, puis atteint une valeur de crête supérieure $V_{Csup}$ de la sinusoïde. La tension de sortie diminue ensuite jusqu'à atteindre la valeur finale de résonance $V_{S1}$. Il sera apprécié que la valeur finale de résonance se trouve entre la valeur médiane $E-V_D$ et la valeur de crête supérieure $V_{Csup}$ de la sinusoïde. Comme cela est connu en soit, deux valeurs de crête consécutives sont séparées d'une demi période, de sorte que le temps entre les valeurs de crêtes $V_{Cinf}$ et $V_{Csup}$ est égale à $T_{osc}/2$. La partie de résonance dure pendant le temps de résonance $T_{rés}$.

Lorsque le courant secondaire s'annule pour devenir négatif, la diode D se bloque et la tension de sortie $V_S$ ne présente plus ensuite d'allure sinusoïdale. Pendant le reste 508 de la phase de magnétisation 503, la tension de sortie $V_S$ diminue linéairement jusqu'à atteindre, à la fin de la phase de magnétisation 503, la valeur $V_{S2}$. L'ouverture 510 de l'interrupteur INT signale la fin de la phase de magnétisation 503 et le début de la phase de démagnétisation 511.

Lors de la phase de démagnétisation, la tension de sortie $V_S$ continue de diminuer linéairement depuis la valeur $V_{S2}$ jusqu'à atteindre la valeur initiale de résonance $V_{S0}$ à la fin du temps de démagnétisation $T_O$.

À cet instant, une nouvelle phase de magnétisation 503 débute.

Dans le cas illustré sur la figure 7, la valeur crête à crête $V_{CC}$ de la tension de sortie $V_S$, c'est-à-dire la différence entre les deux valeurs extrêmes prises par la tension $V_S$ sur une période de fonctionnement $T_F+T_O$ (deux phases de magnétisation et démagnétisation consécutives), est égale à la différence entre les valeurs de crêtes inférieure $V_{Cinf}$ et supérieure $V_{Csup}$ de la sinusoïde.

En référence à la figure 8, les variations de la tension $V_S$ vont être décrites plus en détail, dans le cas où la phase de magnétisation 503 cesse avant le blocage de la diode D.

Dans ce cas, lors de la phase de magnétisation 503, la tension de sortie $V_S$ suit tout d'abord une courbe sinusoïdale de période $T_{osc}$. La tension de sortie $V_S$ part de la valeur initiale de résonance $V_{S0}$. Elle diminue ensuite pour atteindre une valeur de crête inférieure $V_{Cinf}$ de la sinusoïde. La tension de sortie $V_S$ augmente ensuite et passe par la valeur médiane $E-V_D$, puis atteint la valeur finale de résonance $V_{S1}$, qui peut être inférieure à la valeur de crête supérieure $V_{Csup}$ de la sinusoïde.

Dans la phase de démagnétisation 511, l'interrupteur INT est ouvert pendant un temps $T_O$. Alors, la tension de sortie $V_S$ diminue linéairement depuis la valeur finale de résonance $V_{S1}$ jusqu'à atteindre la valeur initiale de résonance $V_{S0}$ en fin du temps de démagnétisation $T_O$.

Ensuite, une nouvelle phase de magnétisation 503 débute.

Dans le cas illustré sur la figure 8, la valeur crête à crête $V_{CC}$ de la tension de sortie $V_S$, c'est-à-dire la différence entre les deux valeurs extrêmes prises par la tension $V_S$ sur une période de fonctionnement $T_F+T_O$, est égale à la différence entre la valeur de crête inférieure $V_{Cinf}$ de la sinusoïde et la valeur finale de résonance $V_{S1}$.

La position sur la courbe sinusoïdale de l'arrêt de la résonance de la tension de sortie $V_S$ n'est pas limitée à ce qui est illustré sur les figures 7 et 8.

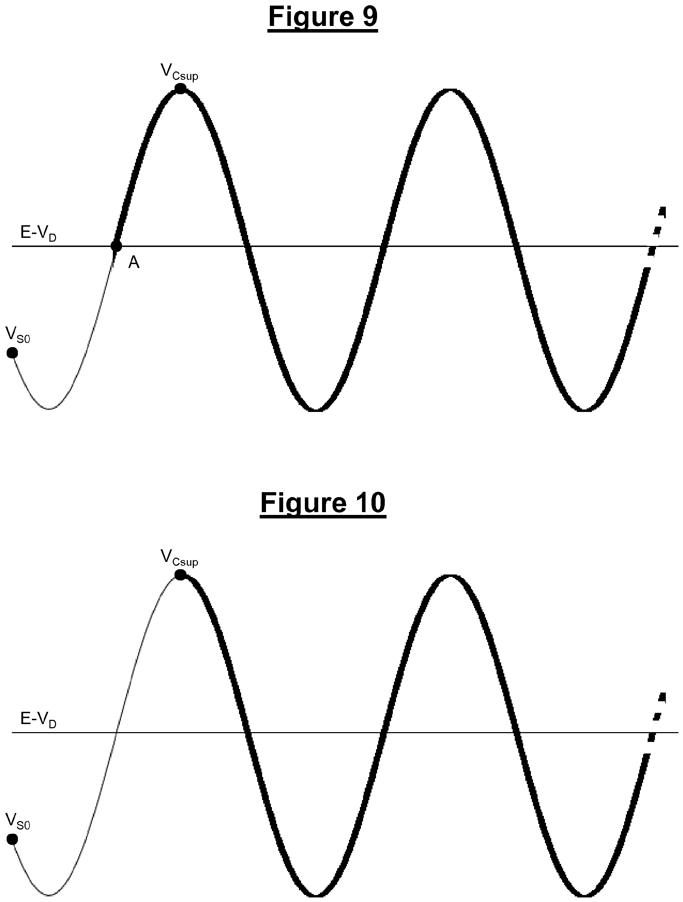

En référence à la figure 9, de manière générale, le temps de magnétisation $T_F$ et la valeur de la capacité de sortie $C_S$ sont tels que, sur la partie de résonance 504 de la phase de magnétisation 503, la tension de sortie $V_S$ décrit une portion de sinusoïde ayant une valeur médiane V et, partant d'une valeur initiale $V_{S0}$ inférieure à la valeur médiane V, passe par la valeur médiane V. Ainsi, dans ce cas, la résonance peut être arrêtée à n'importe quel endroit de la courbe sinusoïdale du moment que la valeur médiane V a été dépassée une fois. La résonance peut ainsi s'étendre sur plusieurs périodes de la sinusoïde. La valeur médiane V est en particulier égale à $E-V_D$.

Une résonance aussi longue peut être obtenue en remplaçant la diode D de l'alimentation électrique 102 de la figure 1 par un interrupteur commandé, fermé lors de la phase de magnétisation 503 et ouvert lors de la phase de démagnétisation 511. Dans ce cas, le temps de magnétisation $T_F$ peut être choisi suffisamment long. Au contraire, la diode D impose l'arrêt de la résonance légèrement après la crête supérieure $V_{Csup}$ de la sinusoïde.

Ainsi, la fin de la résonance peut être située à n'importe quel moment après le point A, correspondant à la première fois où la tension $V_S$ atteint la valeur médiane $E-V_D$. La partie de la courbe sinusoïdale où la résonance peut s'arrêter est indiquée en gras.

En référence à la figure 10, de préférence, le temps de magnétisation $T_F$ et la valeur de la capacité de sortie $C_S$ sont tels que, sur la partie de résonance 504, la tension de sortie $V_S$ passe par la première valeur de crête supérieure $V_{Csup}$ de la sinusoïde.

Ainsi, la fin de la résonance peut être située à n'importe quel moment après la crête supérieure $V_{Csup}$ de la sinusoïde. La partie de la courbe sinusoïdale où la résonance peut s'arrêter est indiquée en gras.

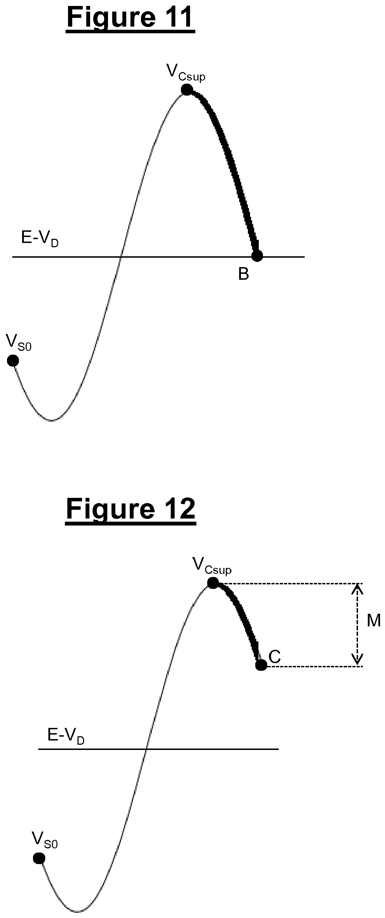

En référence à la figure 11, de préférence encore, le temps de magnétisation $T_F$ et la valeur de la capacité de sortie $C_S$ sont tels que, après avoir passé la valeur de crête supérieure $V_{Csup}$ de la sinusoïde, la tension de sortie $V_S$ diminue pendant le reste de la partie de résonance 504 au plus jusqu'à la valeur médiane $E-V_D$.

Ainsi, la fin de la résonance 504 est située entre la crête supérieure $V_{Csup}$ de la sinusoïde et le point B correspondant à la seconde fois où la tension de sortie $V_S$ passe par la valeur médiane $E-V_D$. La partie de la courbe sinusoïdale où la résonance peut s'arrêter est indiquée en gras.

De préférence encore, le temps de magnétisation $T_F$ et la valeur de la capacité de sortie $C_S$ sont tels que, après avoir passé la valeur de crête supérieure $V_{Csup}$ de la sinusoïde, la tension de sortie $V_S$ diminue pendant le reste de la partie de résonance 504 d'un montant M valant au plus 50% de la différence entre la valeur de crête supérieure $V_{Csup}$ de la sinusoïde et la valeur médiane $E-V_D$.

Ainsi, la fin de la résonance est située entre la crête supérieure $V_{Csup}$ de la sinusoïde et le point C correspondant à la valeur médiane entre la valeur de crête supérieure $V_{Csup}$ de la sinusoïde et la valeur médiane $E-V_D$. La partie de la courbe sinusoïdale où la résonance peut s'arrêter est indiquée en gras.

Le montant M vaut par exemple au plus 25% de la différence entre la valeur de crête supérieure $V_{Csup}$ de la sinusoïde et la valeur médiane $E-V_D$.

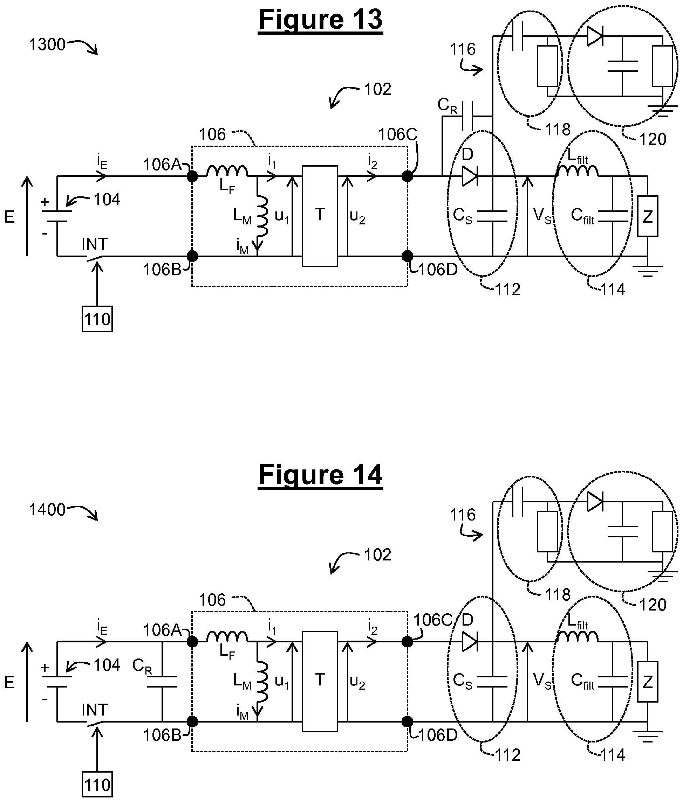

En référence à la figure 13, dans un autre mode de réalisation 1300, la capacité de démagnétisation $C_R$ est en parallèle de la diode D.

En référence à la figure 14, dans un autre mode de réalisation 1400, la capacité de démagnétisation $C_R$ est connectée entre les bornes 106A, 106B du primaire du transformateur 106.

La présente invention n'est pas limitée aux modes de réalisation décrits précédemment, mais est au contraire définie par les revendications qui suivent. Il sera en effet apparent à l'homme du métier que des modifications peuvent y être apportées.

Par exemple, au lieu que les temps de démagnétisation $T_O$ et de magnétisation $T_F$ soient préenregistrés, le dispositif de mesure 116 pourrait commuter le circuit de démagnétisation de manière dynamique. Dans ce cas, le dispositif de mesure 116 pourrait comporter un circuit de mesure de la tension $V_{INT}$ et/ou un circuit de mesure du courant secondaire $i_2$ et commuter le circuit de régulation 108 à l'état démagnétisant lorsque le courant secondaire est mesuré comme nul ou presque nul, et à l'état magnétisant lorsque la tension $V_{INT}$ est mesurée comme nulle ou presque nulle.

En outre, suivant les caractéristiques des composants électriques choisis, il peut arriver que la diode D devienne passante avant la fin du temps de démagnétisation $T_O$.

**Revendications**

1. Alimentation électrique (102) comprenant :

   - un transformateur (106) comportant un primaire destiné à être connecté à une source de tension (104) et présentant une inductance de fuite ($L_F$), le transformateur (106) étant destiné à être parcouru par un courant magnétisant ($i_M$),
   - un circuit de régulation (108) du courant magnétisant ($i_M$) destiné à commuter entre :

     • un état magnétisant dans lequel le circuit de régulation (108) est destiné à laisser le courant magnétisant ($i_M$) augmenter, et
     • un état démagnétisant dans lequel le circuit de régulation (108) est destiné à faire diminuer le courant magnétisant ($i_M$),

   - un dispositif (110) de commande du circuit de régulation (108) destiné à faire commuter le circuit de régulation (108) alternativement de l'état magnétisant à l'état démagnétisant pour respectivement alterner une phase de magnétisation (503) et une phase de démagnétisation (511), le dispositif de commande (110) étant destiné à faire durer la phase de magnétisation (503) pendant un temps de magnétisation ($T_F$),
   - une capacité de sortie ($C_S$) connectée à un secondaire du transformateur (106) de manière à former un circuit résonant avec l'inductance de fuite ($L_F$), la tension entre les bornes de la capacité de sortie ($C_S$) correspondant à la tension de sortie ($V_S$) de l'alimentation,

   **caractérisée en ce que** le temps de magnétisation ($T_F$) et la valeur de la capacité de sortie ($C_S$) sont tels que, sur une partie, dite partie de résonance (504), de la phase de magnétisation (503), la tension de sortie ($V_S$) décrit une portion de sinusoïde et, partant d'une valeur initiale ($V_{S0}$) inférieure à la valeur médiane (V) de la sinusoïde, passe par la dite valeur médiane (V).

2. Alimentation électrique (102) selon la revendication 1, dans laquelle la partie de résonance (504) s'étend sur toute la phase de magnétisation (503).

3. Alimentation électrique (102) selon la revendication 1 ou 2, dans laquelle le temps de magnétisation ($T_F$) et la valeur de la capacité de sortie ($C_S$) sont tels que, sur la partie de résonance (504), la tension de sortie ($V_S$) passe par la valeur de crête supérieure ($V_{Csup}$) de la sinusoïde.

4. Alimentation électrique (102) selon la revendication 3, dans laquelle le temps de magnétisation ($T_F$) et la valeur de la capacité de sortie ($C_S$) sont tels que, après avoir passé la valeur de crête supérieure ($V_{Csup}$) de la sinusoïde, la tension de sortie ($V_S$) diminue pendant le reste de la partie de résonance (504) au plus jusqu'à la valeur médiane (V) de la sinusoïde, et de préférence d'un montant valant au plus 50% de la différence entre la valeur de crête supérieure ($V_{Csup}$) de la sinusoïde et la valeur médiane (V), et de préférence encore d'un montant valant au plus 25% de la différence entre la valeur de crête supérieure ($V_{Csup}$) de la sinusoïde et la valeur médiane (V).

5. Alimentation électrique (102) selon l'une quelconque des revendications 1 à 4, dans laquelle le temps de magnétisation ($T_F$) vaut entre 25% et 75% de la période ($T_{osc}$) de la sinusoïde.

6. Alimentation électrique (102) selon l'une quelconque des revendications 1 à 5, dans laquelle les variations de la tension de sortie ($V_S$) pendant la partie de résonance (504) décrivent une portion de sinusoïde présentant une période ($T_{osc}$) dépendant de la valeur de la capacité de sortie ($C_S$), la valeur de la capacité de sortie ($C_S$) étant telle que ladite période ($T_{osc}$) est comprise entre 0,1 et 2 microsecondes.

7. Alimentation électrique (102) selon l'une quelconque des revendications 1 à 6, dans laquelle le temps de magnétisation ($T_F$) est compris entre :

$$\frac{\pi}{2}\sqrt{L_F C_S}$$

et

$$\frac{3\pi}{2}\sqrt{L_F C_S}$$

où $L_F$ est la valeur de l'inductance de fuite ($L_F$) du transformateur (106) et $C_S$ est la valeur de la capacité de sortie ($C_S$).

8. Alimentation électrique (102) selon l'une quelconque des revendications 1 à 7, dans laquelle le secondaire du transformateur (106) comporte une borne haute (106C) destinée à présenter un potentiel haut et par laquelle un courant secondaire ($i_2$, i) est destiné à sortir et une borne basse (106D) destinée à présenter un potentiel bas par rapport au potentiel haut de la borne haute (106C).

9. Alimentation électrique (102) selon la revendication 8, comportant en outre :

   - une diode (D) destinée à empêcher la circulation d'un courant secondaire ($i_2$, i) vers le secondaire du transformateur (106) par sa borne haute (106C).

10. Alimentation électrique (102) selon la revendication 8 ou 9, dans laquelle le temps de magnétisation ($T_F$) est tel que, à la fin de l'état de magnétisation, le courant secondaire ($i_2$, i) est nul ou vaut au plus 5% de sa valeur crête.

11. Alimentation électrique (102) selon l'une quelconque des revendications 1 à 10, dans laquelle le circuit de régulation (108) comporte :

   - un interrupteur (INT) dont l'état fermé correspond à l'un parmi les états magnétisant et démagnétisant du circuit de régulation (108) et dont l'état ouvert correspond à l'autre parmi les états magnétisant et démagnétisant du circuit de régulation (108), et
   - une capacité de démagnétisation ($C_R$) destinée à provoquer une mise en oscillation du courant magnétisant ($i_M$) durant la phase de démagnétisation (512).

12. Alimentation électrique (102) selon la revendication 11, dans laquelle la capacité de démagnétisation ($C_R$) est en parallèle de l'interrupteur (INT).

13. Alimentation électrique (102) selon la revendication 11, dans laquelle la capacité de démagnétisation ($C_R$) est connectée entre les bornes du primaire du transformateur (106).

14. Alimentation électrique (102) selon les revendications 9 et 11 prises ensemble, dans laquelle la capacité de démagnétisation ($C_R$) est en parallèle de la diode (D).

15. Alimentation électrique (102) selon l'une quelconque des revendications 11 à 14, dans laquelle la capacité de démagnétisation ($C_R$) est en outre destinée à provoquer une mise en oscillation de la tension ($V_{INT}$) aux bornes de l'interrupteur (INT) lors de la phase de démagnétisation (512) au cours de laquelle le circuit de régulation (108) est à l'état démagnétisant, et dans laquelle le dispositif de commande (110) est destiné à faire durer la phase de démagnétisation (512) pendant un temps de démagnétisation ($T_O$) tel que, au bout du temps de démagnétisation ($T_O$), lors de la fermeture de l'interrupteur (INT) pour passer de l'état démagnétisant à l'état magnétisant, la tension ($V_{INT}$) aux bornes de l'interrupteur (INT) soit nulle ou vaille au plus 5% de sa valeur crête.

16. Alimentation électrique (102) selon l'une quelconque des revendications 1 à 15, comportant en outre un dispositif (116) de mesure de la valeur crête à crête ($V_{CC}$) de la tension de sortie ($V_S$).

17. Alimentation électrique (102) selon la revendication 16, dans laquelle le dispositif de mesure (116) est en outre destiné à estimer un courant de sortie ($i_S$) fourni par la borne de la capacité de sortie ($C_S$) connectée à la borne haute (106C) du secondaire du transformateur (106) à partir de la valeur crête à crête ($V_{CC}$) de la tension de sortie ($V_S$).

18. Convertisseur de tension comprenant :

   - un circuit ayant une première partie liée à une première masse électrique et une seconde partie liée à une seconde masse électrique, les dites parties étant séparées par une isolation galvanique,
   - une alimentation électrique selon l'une des revendications précédentes destinée à alimenter une charge électrique située dans une des parties avec une énergie provenant de l'autre partie à travers la dite isolation galvanique.

**19.** Procédé de commande d'une alimentation électrique (102) comportant :

- un transformateur (106) comportant un primaire destiné à être connecté à une source de tension (104) et présentant une inductance de fuite ($L_F$), le transformateur (106) étant destiné à être parcouru par un courant magnétisant ($i_M$),
- un circuit de régulation (108) du courant magnétisant ($i_M$) destiné à commuter entre :

• un état magnétisant dans lequel le circuit de régulation (108) est destiné à laisser le courant magnétisant ($i_M$) augmenter, et
• un état démagnétisant dans lequel le circuit de régulation (108) est destiné à faire diminuer le courant magnétisant ($i_M$),

- une capacité de sortie ($C_S$) connectée à un secondaire du transformateur (106) de manière à former un circuit résonant avec l'inductance de fuite ($L_F$), la capacité de sortie ($C_S$) présentant une tension de sortie ($V_S$) entre ses bornes,

le procédé étant caractérisé en qu'il comporte :

- faire commuter le circuit de régulation (108) alternativement de l'état magnétisant à l'état démagnétisant pour respectivement alterner une phase de magnétisation (503) et une phase de démagnétisation (511), la phase de magnétisation (503) durant pendant un temps de magnétisation ($T_F$) qui est fonction de la valeur de la capacité de sortie ($C_S$) de telle sorte que, sur une partie, dite partie de résonance (504), de la phase de magnétisation (503), la tension de sortie ($V_S$) décrit une portion de sinusoïde et, partant d'une valeur initiale ($V_{S0}$) inférieure à la valeur médiane (V) de la sinusoïde, passe par la dite valeur médiane (V).

**Patentansprüche**

**1.** Elektrische Stromversorgung (102), umfassend:

- einen Transformator (106) mit einer Primärseite, die bestimmt ist, mit einer Spannungsquelle (104) verbunden zu sein und eine Streuinduktivität ($L_F$) aufweist, wobei der Transformator (106) bestimmt ist, von einem magnetisierenden Strom ($i_M$) durchflossen zu sein,
- einen Regelkreis (108) des magnetisierenden Stroms ($i_M$), der bestimmt ist, umzuschalten zwischen:

• einem magnetisierenden Zustand, in welchem der Regelkreis (108) bestimmt ist, die Zunahme des magnetisierenden Stroms ($i_M$) zuzulassen, und
• einem entmagnetisierenden Zustand, in welchem der Regelkreis (108) bestimmt ist, die Abnahme des magnetisierenden Stroms ($i_M$) zu bewirken,

- eine Steuervorrichtung (110) des Regelkreises (108), die bestimmt ist, den Regelkreis (108) alternativ aus dem magnetisierenden Zustand in den entmagnetisierenden Zustand umzuschalten, um jeweils eine Magnetisierungsphase (503) und eine Entmagnetisierungsphase (511) abzuwechseln, wobei die Steuervorrichtung (110) bestimmt ist, die Magnetisierungsphase (503) während einer Magnetisierungszeit ($T_F$) andauern zu lassen,
- eine Ausgangskapazität (Cs), die an eine Sekundärseite des Transformators (106) derart gekoppelt ist, dass ein Resonanzkreis mit der Streuinduktivität ($L_F$) gebildet wird, wobei die Spannung zwischen den Klemmen der Ausgangskapazität ($C_S$) der Ausgangsspannung ($V_S$) der Versorgung entspricht,

**dadurch gekennzeichnet, dass** die Magnetisierungszeit ($T_F$) und der Wert der Ausgangskapazität ($C_S$) derart sind, dass über einen als Resonanzabschnitt (504) bezeichneten Abschnitt der Magnetisierungsphase (503) die Ausgangsspannung ($V_S$) einen Sinuswellenteil beschreibt und ausgehend von einem Ausgangswert ($V_{S0}$) unter dem Mittelwert (V) der Sinuswelle durch den Mittelwert (V) verläuft.

**2.** Elektrische Stromversorgung (102) nach Anspruch 1, wobei sich der Resonanzabschnitt (504) über die gesamte Magnetisierungsphase (503) erstreckt.

3. Elektrische Stromversorgung (102) nach Anspruch 1 oder 2, wobei die Magnetisierungszeit ($T_F$) und der Wert der Ausgangskapazität ($C_S$) derart sind, dass über den Resonanzabschnitt (504) die Ausgangsspannung ($V_S$) durch den oberen Spitzenwert ($V_{Csup}$) der Sinuswelle verläuft.

4. Elektrische Stromversorgung (102) nach Anspruch 3, wobei die Magnetisierungszeit ($T_F$) und der Wert der Ausgangskapazität ($C_S$) derart sind, dass die Ausgangsspannung ($V_S$) nach Überschreiten des oberen Spitzenwerts ($V_{Csup}$) der Sinuswelle während des restlichen Resonanzabschnitts (504) höchsten auf den Mittelwert (V) der Sinuswelle und vorzugsweise um einen Wert sinkt, der höchstens 50 % der Differenz zwischen dem oberen Spitzenwert ($V_{Csup}$) der Sinuswelle und dem Mittelwert (V) beträgt und weiter vorzugsweise um einen Wert, der höchstens 25 % der Differenz zwischen dem oberen Spitzenwert ($V_{Csup}$) der Sinuswelle und dem Mittelwert (V) beträgt.

5. Elektrische Stromversorgung (102) nach einem der Ansprüche 1 bis 4, wobei die Magnetisierungszeit ($T_F$) zwischen 25 % und 75 % der Periode ($T_{osc}$) der Sinuswelle beträgt.

6. Elektrische Stromversorgung (102) nach einem der Ansprüche 1 bis 5, wobei die Schwankungen der Ausgangsspannung ($V_S$) während des Resonanzabschnitts (504) einen Sinuswellenteil beschreiben, der eine Periode ($T_{osc}$) aufweist, die vom Wert der Ausgangskapazität ($C_S$) abhängt, wobei der Wert der Ausgangskapazität ($C_S$) derart ist, dass die Periode ($T_{osc}$) zwischen 0,1 und 2 Mikrosekunden inklusive beträgt.

7. Elektrische Stromversorgung (102) nach einem der Ansprüche 1 bis 6, wobei die Magnetisierungszeit ($T_F$) inklusive ist zwischen:

$$\frac{\pi}{2}\sqrt{L_F C_S}$$

und

$$\frac{3\pi}{2}\sqrt{L_F C_S}$$

wobei $L_F$ der Wert der Streuinduktivität ($L_F$) des Transformators (106) ist und $C_S$ der Wert der Ausgangskapazität ($C_S$) ist.

8. Elektrische Stromversorgung (102) nach einem der Ansprüche 1 bis 7, wobei die Sekundärseite des Transformators (106) eine hohe Klemme (106C), die bestimmt ist, ein hohes Potential aufzuweisen und durch die ein Sekundärstrom ($i_2$, i) bestimmt ist auszutreten, und eine niedrige Klemme (106D), die bestimmt ist, ein niedriges Potential in Bezug zum hohen Potential der hohen Klemme (106C) aufzuweisen, aufweist.

9. Elektrische Stromversorgung (102) nach Anspruch 8, aufweisend ferner:

   - eine Diode (D), die bestimmt ist, das Fließen eines Sekundärstroms ($i_2$, i) zur Sekundärseite des Transformators (106) durch seine hohe Klemme (106C) zu verhindern.

10. Elektrische Stromversorgung (102) nach Anspruch 8 oder 9, wobei die Magnetisierungszeit ($T_F$) derart ist, dass der Sekundärstrom ($i_2$, i) am Ende des Magnetisierungszustands Null ist oder höchstens 5 % seines Spitzenwerts beträgt.

11. Elektrische Stromversorgung (102) nach einem der Ansprüche 1 bis 10, wobei der Regelkreis (108) aufweist:

   - einen Schalter (INT), dessen geschlossener Zustand entweder dem Magnetisierungs- oder dem Entmagnetisierungszustand des Regelkreises (108) entspricht und dessen geöffneter Zustand dem jeweils anderen des Magnetisierungs- und Entmagnetisierungszustands des Regelkreises (108) entspricht, und
   - eine Entmagnetisierungskapazität ($C_R$), die bestimmt ist, den magnetisierenden Strom ($i_M$) während der Entmagnetisierungsphase (512) in Schwingung zu versetzen.

12. Elektrische Stromversorgung (102) nach Anspruch 11, wobei die Entmagnetisierungskapazität ($C_R$) zum Schalter (INT) parallel ist.

**13.** Elektrische Stromversorgung (102) nach Anspruch 11, wobei die Entmagnetisierungskapazität ($C_R$) zwischen den Klemmen der Primärseite des Transformators (106) angeschlossen ist.

**14.** Elektrische Stromversorgung (102) nach den Ansprüchen 9 und 11, gemeinsam herangezogen, wobei die Entmagnetisierungskapazität ($C_R$) zu der Diode (D) parallel ist.

**15.** Elektrische Stromversorgung (102) nach einem der Ansprüche 11 bis 14, wobei die Entmagnetisierungskapazität ($C_R$) ferner bestimmt ist, die Spannung ($V_{INT}$) an den Klemmen des Schalters (INT) bei der Entmagnetisierungsphase (512), bei der der Regelkreis (108) im entmagnetisierenden Zustand ist, in Schwingung zu versetzen, und wobei die Steuervorrichtung (110) bestimmt ist, die Entmagnetisierungsphase (512) während einer Entmagnetisierungszeit ($T_O$) derart andauern zu lassen, dass am Ende der Entmagnetisierungszeit ($T_O$) beim Schließen des Schalters (INT), um aus dem entmagnetisierenden Zustand in den magnetisierenden Zustand zu wechseln, die Spannung ($V_{INT}$) an den Klemmen des Schalters (INT) Null ist oder höchstens 5 % ihres Spitzenwertes beträgt.

**16.** Elektrische Stromversorgung (102) nach einem der Ansprüche 1 bis 15, umfassend ferner eine Messvorrichtung (116) des Spitze-Spitze-Werts (Vcc) der Ausgangsspannung ($V_S$).

**17.** Elektrische Stromversorgung (102) nach Anspruch 16, wobei die Messvorrichtung (116) ferner bestimmt ist, ausgehend vom Spitze-Spitze-Wert (Vcc) der Ausgangsspannung ($V_S$) einen von der Klemme der Ausgangskapazität ($C_S$), die an die hohe Klemme (106C) der Sekundärseite des Transformators (106) angeschlossen ist, bereitgestellten Ausgangsstrom ($i_S$) zu bestimmen.

**18.** Spannungswandler, umfassend:

- einen Kreis mit einem ersten Abschnitt, der mit einer ersten elektrischen Masse verbunden ist, und einem zweiten Abschnitt, der mit einer zweiten elektrischen Masse verbunden ist, wobei die Abschnitte durch eine galvanische Isolation getrennt sind,
- eine elektrische Stromversorgung nach einem der vorangehenden Ansprüche, die bestimmt ist, einen in einem der Abschnitte befindlichen elektrischen Verbraucher mit einer Energie zu versorgen, die von dem anderen Abschnitt durch die galvanische Isolation geliefert wird.

**19.** Verfahren zum Steuern einer elektrischen Stromversorgung (102), aufweisend:

- einen Transformator (106) mit einer Primärseite, die bestimmt ist, mit einer Spannungsquelle (104) verbunden zu sein und eine Streuinduktivität ($L_F$) aufweist, wobei der Transformator (106) bestimmt ist, von einem magnetisierenden Strom ($i_M$) durchflossen zu sein,
- einen Regelkreis (108) des magnetisierenden Stroms ($i_M$), der bestimmt ist, umzuschalten zwischen:

 • einem magnetisierenden Zustand, in welchem der Regelkreis (108) bestimmt ist, die Zunahme des magnetisierenden Stroms ($i_M$) zuzulassen, und
 • einem entmagnetisierenden Zustand, in welchem der Regelkreis (108) bestimmt ist, die Abnahme des magnetisierenden Stroms ($i_M$) zu bewirken,

- eine Ausgangskapazität ($C_S$), die an eine Sekundärseite des Transformators (106) derart gekoppelt ist, dass ein Resonanzkreis mit der Streuinduktivität ($L_F$) gebildet wird, wobei die Ausgangskapazität ($C_S$) zwischen ihren Klemmen eine Ausgangsspannung ($V_S$) aufweist,

wobei das Verfahren **dadurch gekennzeichnet ist, dass** es aufweist:

- das Umschalten des Regelkreises (108) alternativ aus dem magnetisierenden Zustand in den entmagnetisierenden Zustand, damit sich jeweils eine Magnetisierungsphase (503) und eine Entmagnetisierungsphase (511) abwechseln, wobei die Magnetisierungsphase (503) während einer Magnetisierungszeit ($T_F$) andauert, die vom Wert der Ausgangskapazität ($C_S$) derart abhängt, dass über einen als Resonanzabschnitt (504) bezeichneten Abschnitt der Magnetisierungsphase (503) die Ausgangsspannung ($V_S$) einen Sinuswellenteil beschreibt und ausgehend von einem Ausgangswert ($V_{S0}$) unter dem Mittelwert (V) der Sinuswelle durch den Mittelwert (V) verläuft.

**Claims**

1. Power supply (102) comprising:

   - a transformer (106) comprising a primary intended to be connected to a voltage source (104) and having a leakage inductance ($L_F$), the transformer (106) being intended to be passed through by a magnetizing current ($i_M$),
   - a control circuit (108) for the magnetizing current ($i_M$) intended to switch between:

     • a magnetizing state wherein the control circuit (108) is intended to allow the magnetizing current ($i_M$) to increase, and
     • a demagnetizing state wherein the control circuit (108) is intended to reduce the magnetizing current ($i_M$),
   - a control device (110) for the control circuit (108) intended to switch the control circuit (108) alternatively from the magnetizing state to the demagnetizing state in order to respectively alternate a magnetization phase (503) and a demagnetization phase (511), the control device (110) being intended to cause the magnetization phase (503) to last during a magnetization time ($T_F$),
   - an output capacitor ($C_S$) connected to a secondary of the transformer (106) so as to form a resonant circuit with the leakage inductance ($L_F$), the voltage between the terminals of the output capacitor ($C_S$) corresponding to the output voltage ($V_S$) of the power supply,

   **characterised in that** the magnetization time ($T_F$) and the value of the output capacitor ($C_S$) are such that, over a portion, referred to as the resonance portion (504), of the magnetization phase (503), the output voltage ($V_S$) describes a sine wave portion and, starting from an initial value ($V_{S0}$) below the median value (V) of the sine wave, passes through said median value (V).

2. Power supply (102) according to claim 1, wherein the resonance portion (504) extends over the entire magnetization phase (503).

3. Power supply (102) according to claim 1 or 2, wherein the magnetization time ($T_F$) and the value of the output capacitor ($C_S$) are such that, over the resonance portion (504), the output voltage ($V_S$) passes through the upper peak value ($V_{Csup}$) of the sine wave.

4. Power supply (102) according to claim 3, wherein the magnetization time ($T_F$) and the value of the output capacitor ($C_S$) are such that, after having passed the upper peak value ($V_{Csup}$) of the sine wave, the output voltage ($V_S$) decreases during the remainder of the resonance portion (504) at most to the median value (V) of the sine wave, and preferably by an amount that is at most 50% of the difference between the upper peak value ($V_{Csup}$) of the sine wave and the median value (V), and more preferably by an amount that is at most 25% of the difference between the upper peak value ($V_{Csup}$) of the sine wave and the median value (V).

5. Power supply (102) according to any of claims 1 to 4, wherein the magnetization time ($T_F$) is between 25% and 75% of the period ($T_{OSC}$) of the sine wave.

6. Power supply (102) according to any of claims 1 to 5, wherein the variations of the output voltage ($V_S$) during the resonance portion (504) describe a sine wave portion that has a period ($T_{OSC}$) that depends on the value of the output capacitor ($C_S$), the value of the output capacitor ($C_S$) being such that said period ($T_{OSC}$) is between 0.1 and 2 microseconds.

7. Power supply (102) according to any of claims 1 to 6, wherein the magnetization time ($T_F$) is between:

$$\frac{\pi}{2}\sqrt{L_F C_S}$$

and

$$\frac{3\pi}{2}\sqrt{L_F C_S}$$

where $L_F$ is the value of the leakage inductance ($L_F$) of the transformer (106) and $C_S$ is the value of the output capacitor (Cs).

**8.** Power supply (102) according to any of claims 1 to 7, wherein the secondary of the transformer (106) comprises a high terminal (106C) intended have a high potential and through which a secondary current ($i_2$, i) is intended to be output and a low terminal (106D) intended to have a low potential in relation to the high potential of the high terminal (106C).

**9.** Power supply (102) according to claim 8, comprising furthermore:

- a diode (D) intended to prevent the circulation of a secondary current ($i_2$, i) to the secondary of the transformer (106) via its high terminal (106C).

**10.** Power supply (102) according to claim 8 or 9, wherein the magnetization time ($T_F$) is such that, at the end of the magnetizing state, the secondary current ($i_2$, i) is zero or is at most 5% of its peak value.

**11.** Power supply (102) according to any of claims 1 to 10, wherein the control circuit (108) comprises:

- a switch (INT) of which the closed state corresponds to one among the magnetizing and demagnetizing states of the control circuit (108) and of which the open state corresponds to the other among the magnetizing and demagnetizing states of the control circuit (108), and
- a demagnetizing capacitor ($C_R$) intended to provoke a putting into oscillation of the magnetizing current ($i_M$) during the demagnetization phase (512).

**12.** Power supply (102) according to claim 11, wherein the demagnetizing capacitor ($C_R$) is in parallel with the switch (INT).

**13.** Power supply (102) according to claim 11, wherein the demagnetizing capacitor ($C_R$) is connected between the terminals of the primary of the transformer (106).

**14.** Power supply (102) according to claims 9 and 11 taken together, wherein the demagnetizing capacitor ($C_R$) is in parallel with the diode (D).

**15.** Power supply (102) according to any of claims 11 to 14, wherein the demagnetizing capacitor ($C_R$) is furthermore intended to cause the putting into oscillation of the voltage ($V_{INT}$) at the terminals of the switch (INT) during the demagnetization phase (512) during which the control circuit (108) is in the demagnetizing state, and wherein the control device (110) is intended to cause the demagnetization phase (512) to last during a demagnetization time ($T_O$) such that, after the demagnetization time ($T_O$), during the closing of the switch (INT) in order to switch from the demagnetizing state to the magnetizing state, the voltage ($V_{INT}$) at the terminals of the switch (INT) is zero or is at most 5% of its peak value.

**16.** Power supply (102) according to any of claims 1 to 15, further comprising a device (116) for measuring the peak-to-peak value (Vcc) of the output voltage (Vs).

**17.** Power supply (102) according to claim 16, wherein the measuring device (116) is furthermore intended to estimate an output current ($i_S$) supplied by the terminal of the output capacitor ($C_S$) connected to the high terminal (106C) of the secondary of the transformer (106) starting from the peak-to-peak value ($V_{CC}$) of the output voltage ($V_S$).

**18.** Voltage convertor comprising:

- a circuit having a first portion connected to the a first electrical chassis and a second portion connected to a second electrical chassis, with said portions being separated by a galvanic isolation,
- an electrical power supply according to one of the preceding claims intended to supply an electrical charge located in one of the portions with an energy coming from the other portion through said galvanic isolation.

**19.** Method for controlling an electrical power supply (102) comprising:

- a transformer (106) comprising a primary intended to be connected to a voltage source (104) and having a leakage inductance ($L_F$), the transformer (106) being intended to be passed through a magnetizing current ($i_M$),

- a control circuit (108) for the magnetizing current ($i_M$) intended to switch between:

  • a magnetizing state wherein the control circuit (108) is intended to allow the magnetizing current ($i_M$) to increase, and
  • a demagnetizing state wherein the control circuit (108) is intended to reduce the magnetizing current ($i_M$),

- an output capacitor ($C_S$) connected to a secondary of the transformer (106) in such a way as to form a resonant circuit with the leakage inductance ($L_F$), with the output capacitor ($C_S$) having an output voltage ($V_S$) between its terminals,

with the method **characterised in that** it includes:

- switching the control circuit (108) alternatively from the magnetizing state to the demagnetizing state in order to respectively alternate a magnetization phase (503) and a demagnetization phase (511), the magnetization phase (503) during a magnetization time ($T_F$) that is according to the value of the output capacitor (Cs) in such a way that, over a portion, referred to as the resonance portion (504), of the magnetization phase (503), the output voltage ($V_S$) describes a sine wave portion and, starting from an initial value ($V_{S0}$) below the median value (V) of the sine wave, passes through said median value (V).

## Figure 1

## Figure 2

# Figure 3

# Figure 4

# Figure 5

```
                                                    ◆
                                                    │
                                                    ▼
                                    ┌───────────────────────────────────┐
                                    │               502                 │
                                    │    Fermeture de l'interrupteur     │
                                    └───────────────────────────────────┘
                                                    │
                    503                             ▼
                            ┌───────────────────────────────────────────┐
                            │   ┌───────────────────────────────────┐   │
                            │   │               504                 │   │
                            │   │            résonance              │   │
                            │   └───────────────────────────────────┘   │
                            │                    │                      │
                            │                    ▼                      │
  ┌───────────────────────┐ │   ┌───────────────────────────────────┐   │
  │         514           │ │   │               506                 │   │
  │  Mesure de la valeur  │ │   │        Blocage de la diode        │   │
  │  crête à crête de la  │ │   └───────────────────────────────────┘   │
  │   tension de sortie   │ │                    │                      │
  └───────────────────────┘ │                    ▼                      │
                            │   ┌───────────────────────────────────┐   │
                            │   │               508                 │   │
                            │   │           Magnétisation           │   │
                            │   └───────────────────────────────────┘   │
                            └───────────────────────────────────────────┘
                                                    │
              500                                   ▼
                                    ┌───────────────────────────────────┐
                                    │               510                 │
                                    │    Ouverture de l'interrupteur     │
                                    └───────────────────────────────────┘
                    511                             │
                            ┌───────────────────────▼───────────────────┐
                            │   ┌───────────────────────────────────┐   │
                            │   │               512                 │   │
                            │   │          Démagnétisation          │   │
                            │   └───────────────────────────────────┘   │
                            └───────────────────────────────────────────┘
```

# Figure 6

# Figure 7

# Figure 8

# Figure 9

$V_{Csup}$

$E-V_D$

A

$V_{S0}$

# Figure 10

$V_{Csup}$

$E-V_D$

$V_{S0}$

# Figure 11

$V_{Csup}$

$E-V_D$

B

$V_{S0}$

# Figure 12

$V_{Csup}$

M

C

$E-V_D$

$V_{S0}$

## Figure 13

## Figure 14

**EP 2 940 849 B1**

### RÉFÉRENCES CITÉES DANS LA DESCRIPTION

**Documents brevets cités dans la description**

- US 20140029316 A

**Littérature non-brevet citée dans la description**

- **LIU et al.** A novel résonant converter topology for DC-to-DC power supply. *IEEE Transactions on aerospace and electronic systems,* Octobre 1995, vol. 31 (4), 1301